# EUROPEAN PATENT SPECIFICATION

(11) **EP 3 601 783 B1**
(45) Date of publication and mention of the grant of the patent: **06.04.2022**
(21) Application number: 18707252.5
(22) Date of filing: 06.02.2018
(51) Int. Cl.: F03D 1/06, F03D 17/00

(54) **WIND TURBINE ROTOR BLADE WITH EMBEDDED SENSORS**
ROTORBLATT EINER WINDTURBINE MIT EINGEBETTETEN SENSOREN
PALE DE ROTOR D'ÉOLIENNE AVEC CAPTEURS INCORPORÉS

(30) Priority: 09.05.2017 DE 102017207808
(43) Date of publication of application: 05.02.2020
(73) Proprietor: Siemens Gamesa Renewable Energy A/S, 7330 Brande (DK)
(72) Inventor: GIROLAMO, Donato, 2215 GH Voorhout (NL)
(74) Representative: Aspacher, Karl-Georg
(86) International application number: PCT/EP2018/052926
(87) International publication number: WO 2018/206159

(56) References cited:
- GB-A- 2 481 842
- US-A1- 2007 183 888
- US-A1- 2011 040 497
- US-A1- 2012 161 446
- US-A1- 2014 151 578

## Description

The present invention relates to a rotor blade of a wind turbine. The invention particularly relates to rotor blade of a wind turbine wherein one or several sensors are embedded in a structural member of the rotor blade. The invention furthermore relates to a wind turbine for generating electrical energy comprising such a rotor blade.

Wind turbine blades are typically constructions made of composite materials that, compared to conventional metal constructions, exhibit different failure modes, both in terms of damage initiation and propagation. Damage in a composite structure can be difficult to detect with visual inspections - which is the common practice in industry - and damage can propagate so fast that common inspection schedules do not guarantee the discovery of the fault prior to catastrophic failure.

The current most common practice for monitoring the structural integrity of a wind turbine blade is through regular inspections that are visually carried out by trained technicians and/or robotic cameras originally developed for pipes inspection. Additional technologies used for remote monitoring of the structural health of composite wind turbine blades are based on the estimation of the fundamental blade frequencies through accelerations measured in the nacelle or in the rotor blade itself. These technologies are usually classified as global since they are based on global characteristics of the blade and are characterized by low sensitivity to damage: only when the structural damage becomes considerably large to affect the global mechanical properties of the structure they become sensitive to the damage.

Sensor technology in wind turbine blades is limited by the risk and effect of lightning strikes: metal-based sensors are usually discarded due to their electrical conductivity that can be fatal to the sensor system in the event of a lightning strike. Alternative sensing technologies are based on optical sensors such as optical fibers with fiber Braggs gratings (FBG) that allow strain measurements. A main challenge in using FBG in large high production volume composite structures is the instrumentation, especially in large structures: it is a delicate, time-consuming, costly, long process with a high failure rate both during and right after installation. These issues are amplified in rough industrial environments and complex manufacturing processes such as the vacuum assisted resin transfer molding (VARTM) process which uses a mold tool with a vacuum bag and vacuum to assist the resin flow. The VARTM process is, for instance, used by Siemens in its well-known Integral Blade manufacturing process.

One known arrangement US2007/183 888 A1 relates to a wind turbine blade comprising a number of pre-fabricated strips arranged in a sequence along the outer periphery. The strips consist of a fibrous composite material, preferably carbon fibres, and consist of a wooden material, preferably plywood or wooden fibres held in a cured resin. It is suggested to embed optical fibres in the blade, either additional to the reinforcing fibres or as a substitute to the reinforcing fibres. Optical fibres may be used to measure loads on and within the surface of the blade during operation of the wind turbine.

In consideration of the aforesaid, it is an object of the present invention to provide a concept how to better monitor the structural characteristics and/or integrity of a rotor blade of a wind turbine throughout its complete lifetime, from manufacturing to decommissioning of the rotor blade. This object is achieved by the independent claims. Advantageous modifications and embodiments are disclosed in the dependent claims.

According to the invention, there is provided a rotor blade of a wind turbine, wherein the rotor blade comprises a leading edge section with a leading edge and a trailing edge section with a trailing edge, wherein the leading edge and the trailing edge divide the outer surface of the rotor blade into a suction side and a pressure side. The rotor blade further comprises a blade shell which defines the shape of the rotor blade, wherein the blade shell comprises a suction side portion and a pressure side portion, and a structural element for reinforcing and stiffening the structure of the rotor blade, wherein the structural element is made of a pultruded fiber-reinforced plastic material. The rotor blade is characterized in that the structural element comprises at least one optical fiber which is embedded in the pultruded fiber-reinforced plastic material for monitoring structural characteristics and/or integrity of the structural element, wherein the optical fiber comprises at least one sensor.

In other words, the invention proposes a novel system that can be used for structural health monitoring (SHM) of wind turbine rotor blades. The system employs pultruded "smart" structures with embedded sensors. These structures - or structural elements - serve the dual purpose of load carrying and strain sensing along the main stress paths of overall blade components, e.g. spar caps or root section reinforcement parts of the rotor blade. As the one or more sensors is/are optical fiber based, the sensor(s) is/are immune to lightning strikes. In addition, the provision of the sensor(s) can be carried out in a protected environment and can even be carried out completely separate from the typically rough industrial environment where the rotor blade is manufactured.

The present invention is in principle applicable to any structural element of the rotor blade. Advantageous applications focus on components which bear a load carrying role and which are prone to stress and strain. Concrete examples thereof are spar caps at the pressure and suction side of the blade shell or so-called root section reinforcement parts.

Spar caps are typically connected in an I-beam shape to the web (or "beam" or "spar"), wherein the spar caps basically carry longitudinal loads while the web mostly carries shear load from bending moments.

The root section reinforcement parts are typically inserted into the root section of the laminate of the blade shell and reinforce the heavily loaded root and inboard section of the rotor blade. The root section reinforcement parts typically become thinner in a direction away from the root and, thus, "fade out" or merge with the standard fiber-reinforced composite material of the blade shell. Embedding one or more sensors in these root section reinforcement parts is advantageous as these parts are manufactured before laying them out in the mold and can thus be prepared specifically for the purpose of providing means to monitor e.g. the laminate quality in a reliable and elegant manner.

The fibers of the fiber-reinforced plastic pultruded element may in principle comprise any type of fiber. Proven material for wind turbine rotor blades include glass, carbon, aramid and/or basalt fibers.

Regarding the matrix material, suitable components may be chosen from the following compositions: epoxy, polyurethane, vinylester or polyester thermosetting plastic.

One purpose of the sensor(s) embedded into the structural elements is to monitor the characteristics of the fiber-reinforced plastic material of the structural element and, as a consequence, those of the rotor blade that comprises the at least one structural element. This comprises in particular the monitoring of delamination, cracks, in particular transverse cracks, and/or a fracture of the fiber-reinforced plastic material. Note that the presented system has a "dual" working principle: First, if one of the embedded sensors happen to be in the "process zone" of the damage, this will show as a local strain increase at the sensor. Second, if the damage is far away from the sensor(s) (i.e. in another zone of the rotor blade), but affects the global structural response of the blade - especially in terms of flapwise bending moment distribution - this will show in the system as different strain distribution throughout the "smart" structural elements.

A reliable detection of these failures at an early stage is highly advantageous for the owner of a wind turbine, as thus costly service and repair works on the rotor blades can be avoided, or at least planned efficiently beforehand. Additionally, catastrophic failures can be avoided.

Thus, monitoring the structural characteristics and/or integrity of the structural element may include monitoring delamination, cracks, in particular transverse cracks, and/or a fracture of the structural element.

In the case that the structural element is connected with the blade shell, a root section of the rotor blade or a web of the rotor blade as a laminate forming a composite material, monitoring the structural characteristics and/or integrity of the structural element may also include monitoring delamination, cracks, in particular transverse cracks, and/or a fracture of the composite material. In other words, the sensor may not only be able to characterize the structure and integrity of the structural element itself, but also of the composite comprising the structural element and a further component connected to it. Exemplarily, failure of the (cast) interface between the structural element and adjacent components may also be monitored by the sensors embedded into the structural component.

Another purpose of the sensor(s) embedded into the structural elements is to monitor the changes in the strain distribution throughout the structural element which result from the global bending and/or twisting of the rotor blade subject to cyclic aerodynamic and gravitational forces.

The detection of these configurational changes in the rotor blade may, first, also contribute to better calculate and foresee e.g. aging of certain components. Second, however, it is advantageous to have information on changes in the shape such as bending and/or twisting, that can be obtained from measured strains through proper calibration, to control and regulate the operation of the wind turbine. For instance, individual pitch control could be improved based on input data which are based on the monitoring of a structural element with an embedded sensor according to this invention.

An additional advantage of the embedded sensor(s) as conceived in the present invention is that the data acquired by the proposed system could be used in aero-structural control paradigms, such as e.g. individual pitch control (IPC).

In an embodiment of the invention, the optical fiber is aligned substantially in lengthwise direction of the rotor blade.

This allows a long distance to monitor - typically dozens of meters for a rotor blade which exceeds fifty meters in length - which basically all new wind turbine rotor blades currently do. In this context, the "lengthwise" direction of the rotor blade is referred to as the direction, or orientation, which extends from the root to the tip of the rotor blade.

Exemplarily, the length of the optical fiber exceeds five per cent, in particular ten per cent, even more particularly twenty percent of the length of the rotor blade.

Regarding the sensor which is embedded in the optical fiber, in principle any fiber optic sensor (FOS) can be used. In practice, a distributed Bragg reflector, in particular a fiber Bragg grating, constructed in a short segment of the optical fiber has been proven to be a preferred choice, as devised by the inventors.

In this context, a "short" segment is to be understood as a segment of the optical fiber which has a length which is less than ten per cent of the length of the embedded optical fiber itself. In particular, the segment of the optical fiber may have a length which is even less than five per cent of the length of the embedded optical fiber.

The fiber Bragg grating is to be understood as an arrangement wherein a periodic variation in the refractive index of the core of fiber leads to a wavelength-specific dielectric mirror. The function of the fiber Bragg grating is the detection of a failure in the fiber-reinforced plastic material due to damage inflicted to the optical fiber. Again, if the embedded fiber Bragg grating (FBG) happens to be in the "process zone" of the damage, this will show as a local strain increase at the FBG. If the damage, however, is far away from the FBG, namely in another zone of the rotor blade, but affects the global structural response of the blade, this will show in the system as different strain distribution throughout the "smart" structural elements.

In an embodiment of the invention, the optical fiber comprises a plurality of sensors which are distributed lengthwise in the optical fiber.

The advantage of providing a plurality of sensors distributed lengthwise along the optical fiber is that information about the lengthwise position along the optical fiber is provided, if the sensor detects a failure in the fiber-reinforced plastic material. Descriptively speaking, by providing a plurality of sensors within the optical fiber, it can be determined where, i.e. at which spanwise position, the failure in the fiber-reinforced plastic material occurred. Additionally, a spanwise distribution of sensors allows a high resolution reconstruction the spanwise strain distribution and/or bending response of the rotor blade.

In another embodiment of the invention, the rotor blade comprises a plurality of optical fibers with respective sensors, which are in particular arranged substantially in parallel to each other in the fiber-reinforced plastic pultruded element.

Several optical fibers may e.g. be provided for the sake of redundancy. It is not uncommon that an optical fiber is damaged during pultrusion of the structural element. As this is often only identified after completion of the pultruded element, or even after inserting the pultruded element into the wind turbine rotor blade, it is advantageous to provide several optical fibers with sensors embedded into the structural element.

In another embodiment of the invention, the plurality of optical fibers are connected to an optical interrogator, which itself is connectable to a programmable logic controller (PLC) of the wind turbine.

The optical interrogator has the purpose to convert the wavelengths reflected by each sensor to mechanical strain values that are transferred to the PLC. A dedicated multiplexing method, integrated in the system, allows to identify the spanwise position of each sensor. Dedicated data postprocessing within the PLC determines structural faulty states of the rotor blade and/or accurately determines the position of failure in the fiber-reinforced plastic material if a plurality of sensors is distributed in the optical fiber.

Exemplarily, the optical interrogator is situated in the root section of the rotor blade or in the hub of the wind turbine.

The invention is finally also related to a wind turbine for generating electricity comprising at least one rotor blade as described above.

Embodiments of the invention are now described, by way of example only, with the help of the accompanying drawings, of which:
- Figure 1: shows a cross-sectional view of a rotor blade of a wind turbine;
- Figure 2: shows a perspective view of a structural element with embedded optical fibers;
- Figure 3: shows a cut through such a structural element with embedded optical fibers with sensors and sensor terminations or "tails";
- Figure 4: shows a cross-sectional view of a rotor blade of a wind turbine with spar caps according to a first embodiment of the invention;
- Figure 5: shows a structural element, namely a root section reinforcement, with embedded optical fibers according to a second embodiment of the invention;
- Figure 6: shows a top view of a rotor blade with a structural element with embedded optical fibers; and
- Figure 7: shows a method of manufacturing a pultruded fiberreinforced plastic material with embedded optical fibers.

Note that the drawings are in schematic form. Furthermore, similar or identical elements may be referenced by the same reference signs.

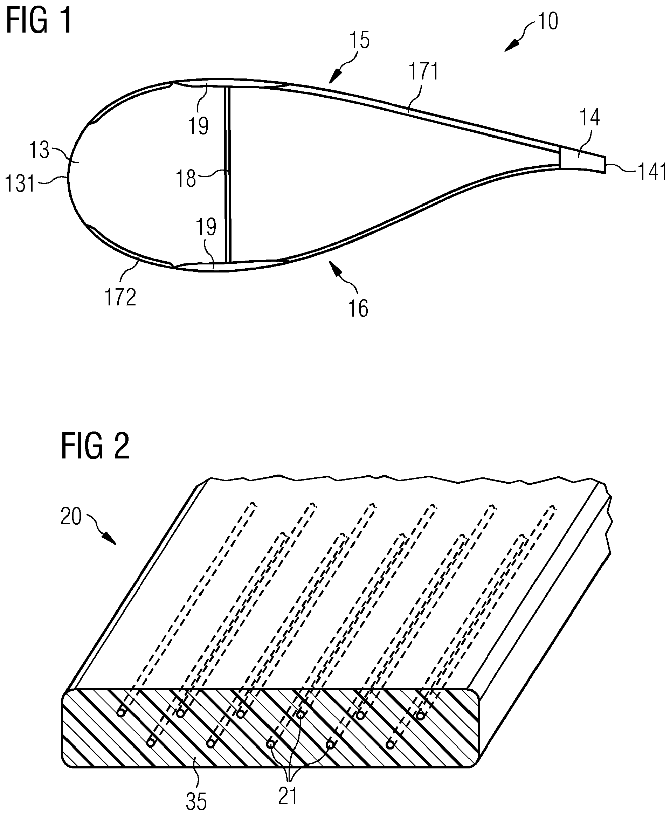

Figure 1 shows a cross-sectional view of a rotor blade 10 of a wind turbine. The rotor blade 10 comprises a leading edge section 13 with a leading edge 131 and, opposite to the leading edge 131, a trailing edge section 14 with a trailing edge 141. The leading edge 131 and the trailing edge 141 divide the outer surface of the rotor blade 10 into a suction side 15 and a pressure side 16. The geometry, i.e. the shape, of the rotor blade 10 is defined by the blade shell of the rotor blade 10. Likewise, the blade shell can be divided into a suction side portion 171 and a pressure side portion 172. In order to guarantee a sufficient strength and stability, there is provided a web 18 which extends between the suction side portion 171 and the pressure side portion 172 of the blade shell. The web 18 typically extends over most of the length of the rotor blade 10, i.e. from the root section to the tip section of the rotor blade. At these portions of the blade shell where the web 18 meets the blade shell, the blade shell is reinforced by a spar cap 19, respectively. In other words, both the suction side portion 171 and the pressure side portion 172 of the blade shell are reinforced by a structural element or "sub-component", namely the spar cap 19.

The blade shell is typically configured as a laminate comprising a fiber-reinforced plastic material and core materials (e.g. balsa wood, ply-wood, foam). Typically, the fiber-reinforced plastic pultruded element is relatively thin, typically and depending on the spanwise position only one to ten millimeter thick, while the core may amount to a thickness up to a few centimeters. As can be seen in the schematic illustration of Figure 1, the thickness of the blade shell varies.

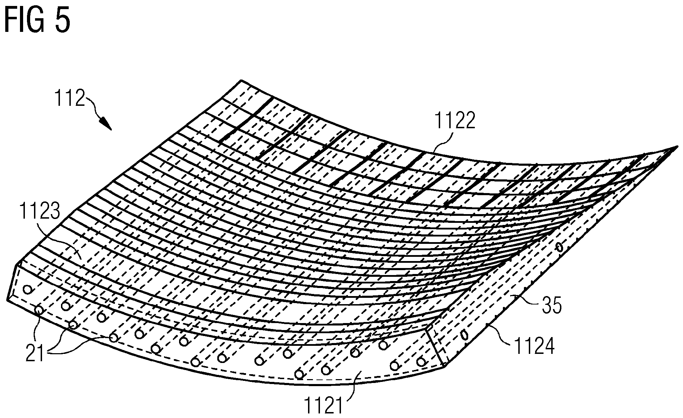

First, the thickness of the blade shell may depend on the chordwise position between the leading edge 131 and the trailing 141. Second, it depends on whether the blade shell is part of the suction side portion 171 or the pressure side portion 172. Another variation is based on the position in lengthwise or spanwise direction, i.e. whether the blade shell is closer to the root section or closer to the tip section of the rotor blade. In spanwise positions very close to the root of the rotor blade, the blade section profile might look considerably different from the one represented inFigure 4 with blade shell thicknesses considerably increasing from what previously specified (up to few centimeters) and shape transitioning from aerodynamic to cylindrical shapes. These details could be inferred from Figure 5.

Figure 2 shows a perspective view of a structural element 20 with embedded optical fibers 21. The structural element 20 is a pultruded, i.e. stiff and ridged element, and the structural element 20 is basically made of a fiber-reinforced plastic material 35. However, in the fiber-reinforced plastic material 35, there are embedded a plurality of distributed optical fibers 21 which comprise several sensors as it will be visible in the following. Note that the position of the optical fiber 21 can be predetermined and even a pattern as seen in Figure 2 can be provided.

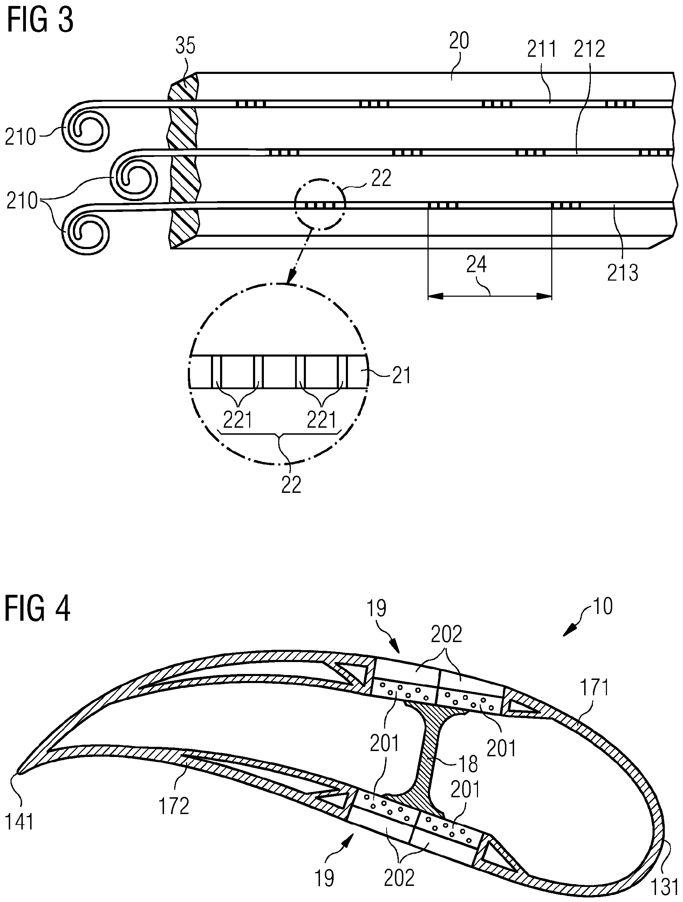

Figure 3 shows a cut through such a structural element 20 which comprises a plurality of optical fibers 21 with sensors 22. In Figure 3, three optical fibers 21, namely a first optical fiber 211, a second optical fiber 212 and a third optical fiber 213 can be seen. All three optical fibers 211, 212, 213 are arranged substantially parallel to each other. They are also arranged in lengthwise direction of the pultruded structural element 20. Each optical fiber 21 is provided with sensors 22 wherein one sensor 22 is shown separately in more detail in Figure 3.

The sensors 22 can exemplarily be designed as fiber Bragg gratings. This means that each sensor 22 comprises a plurality of gratings 221, wherein each grating 221 partially reflects the light in the optical fiber 21. In Figure 3, each sensor 22 consists of four gratings 221. Note that this is an example only. In practice, more than four gratings are common. Also note that the dimensions in Figure 3 are not to scale but are chosen such that schematically the principle and concept of the invention shall become clear. For example, in practice, the distance between adjacent gratings 221 is typically very small, e.g. in the range of hundreds of nanometers. The sensors 22 are spaced from each other at a predetermined distance 24. These parts of the optical fibers which are outside and which exit the pultruded structural element 20 are referred to as optical fiber tails 210. As the optical fibers 21 are not embedded any longer in the cured fiber-reinforced plastic material 35, these optical fiber tails 210 are usually not elongated and straight any longer. The optical fiber tails 210 are usually used to connect the optical fibers 21 with an optical interrogator (not shown in Figure 3).

Figure 4 shows again a cross-sectional view of a rotor blade 10 of a wind turbine, this time comprising spar caps 19 which comprise structural elements 20 according to the invention.

Again, the rotor blade comprises a leading edge 131 and a trailing edge 141 which divide the blade shell into a suction side portion 171 and a pressure side portion 172. In order to keep the shape and the stability of the blade shell and of the rotor blade as a whole, there is provided a web 18 which extends between the suction side portion 171 and the pressure side portion 172 of the blade shell. Where the web 18 meets the blade shell, the blade shell is reinforced with spar caps 19. In the exemplary embodiment of Figure 4, each spar cap 19 comprises four elongated structural elements, in particular two structural elements 201 with sensors and two structural elements 202 without sensors. In other words, each spar cap 19 comprises two structural elements which are configured and designed conventionally and two structural elements 201 with embedded sensors according to the present invention.

If the rotor blade 10 is affected by a structural fault, for instance a manufacturing defect and/or material failure, the damage state will most likely influence the strain distribution along the spar caps 19. Depending on the failure mode, damage location and damage size, the spar cap strain diagram will have local strain increase or global changes. Therefore, mapping and monitoring the strain distribution along at least one of the spar caps 19 will allow detection of structural damage and avoid structural collapse. In this context and to achieve this aim, the provision of structural elements 201 with embedded sensors is of great importance. The structural elements 201 may well extend over the entire length of the rotor blade, i.e. from the root section to the tip section of the rotor blade. Preferably, the structural elements 201 start a few meters away from the root of the rotor blade and stop a few meters before the tip of the rotor blade.

Figure 5 shows a structural element, namely a root section reinforcement 112, with a plurality of embedded optical fibers 21 according to a second embodiment of the invention. The root section reinforcement 112 comprises a root end 1121, a tip end 1122, an inner side 1123 and an outer side 1124. The root section reinforcement 112 is arranged and prepared to be placed between, i.e. to be "sandwiched", between a fiber layer on its inner end 1123 and between another fiber layer on its outer end 1124. The inner end 1123 is destined to face towards the cavity of the rotor blade, in case that the root section reinforcement 112 is integrated in a rotor blade, and the outer end 1124 of the root section reinforcement 112 is destined to face towards the outside, i.e. towards the surrounding ambiance, again in case that the root section reinforcement 112 is integrated in a rotor blade. Likewise, the root end 1121 of the root section reinforcement 112 faces towards the root of the rotor blade (or even is part of the root) and the tip end 1122 of the root section reinforcement 112 faces towards the tip end of the rotor blade.

The function of the root section reinforcement 112 is to structurally reinforce and support the root section of the rotor blade, as in that section of the rotor blade particularly high bending moments typically occur.

The thickness of the root section reinforcement 112 typically diminishes from its root end 1121 towards its tip end 1122, as it is the case in the exemplary embodiment shown in Figure 5. The root section reinforcement section 112 is made of pultruded fiber-reinforced plastic material 35.

Compared to conventional root section reinforcements, the root section reinforcement 112 according to one embodiment of the present invention comprises a plurality of optical fibers 21. These optical fibers 21 are arranged substantially in lengthwise direction (i.e. from the root end 1121 to the 1122 or vice versa) and substantially in parallel to each other.

The optical fibers 21 are embedded into the fiber-reinforced plastic material 35. A substantial number of optical fibers 21 are provided; first, for reasons of redundancy, and second, for providing a detailed monitoring of the structural health of the root section reinforcement 112 and adjacent components of the rotor blade.

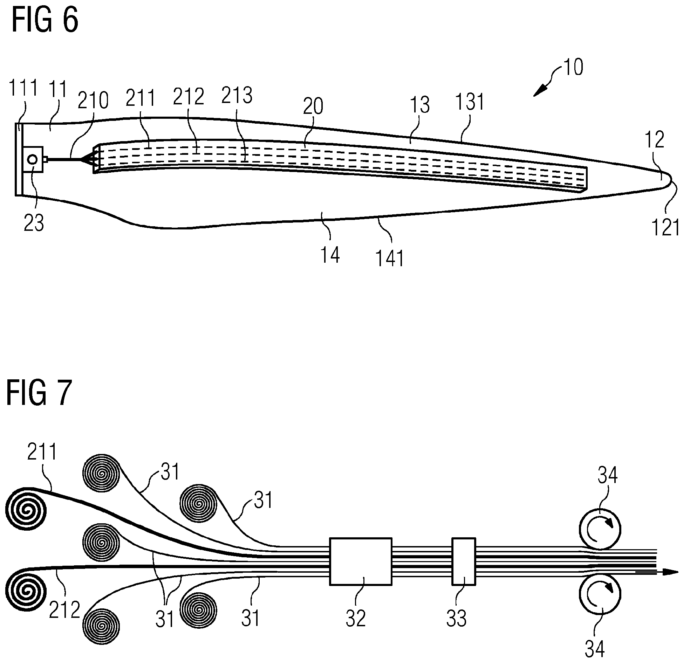

Figure 6 shows a very schematic top view on a rotor blade 10 with a structural element 20, wherein the structural element 20 comprises embedded optical fibers 21 of which a first optical fiber 211, a second optical fiber 212 and a third optical fiber 213 are shown in Figure 6. All three optical fiber 211, 212, 213 extend over the entire length of the structural element 20. These optical fibers 211, 212, 213 are arranged basically in parallel to each other. They are not meant to simultaneously monitor the strain and load in the structural member 20. Moreover, the provision of several optical fibers is destined to create redundancy in the structural member because the insertion in the pultruded structural element before and during manufacturing can create damages to the optical fiber. Therefore, if for example, the first and the third optical fiber are damaged and do not work properly, then the second optical fiber 212 is used for monitoring the strain and the load in the structural member 20. Redundancy is also beneficial when one or more optical fibers are interrupted due to structural repair.

Figure 6 also shows an optical interrogator 23 which connects the optical fiber tails 210 with the pultruded structural element 20. The optical interrogator 23 is able to convert wavelengths reflected from the sensor into strains. Together with a programmable logic controller, it is possible to determine the lengthwise or spanwise position or location where a failure in the structural element occurs. Such an optical interrogator 23 is particularly useful if a plurality of sensors 22 is arranged in lengthwise direction in the optical fibers. In the example of Figure 6, the optical interrogator 23 is located in the root section 11 of the rotor blade 10.

Finally, Figure 7 shows the manufacturing process of a pultruded fiber reinforced plastic element with embedded optical fibers.

At the left side, the individual structural fiber bundles, for example, glass fiber rovings or carbon fiber rovings can be seen. Between selected fiber bundles, an optical fiber - in the example of Figure 6, a first optical fiber 211 and a second optical fiber 212 - is/are arranged.

In a next step, the structural fiber bundles and the optical fibers are brought together and are aligned with each other before they enter a resin bath 32. After impregnating and soaking the structural fiber bundles 31 and the optical fibers 21 with resin, the resin is cured by a dye 33.

Subsequently, in a last step, the resulting element is pulled through co-rotating cylinders 34 and there results a rigid, pultruded structural element with embedded optical fibers 21.

## Claims

1. Rotor blade (10) of a wind turbine, the rotor blade (10) comprising
- a leading edge section (13) with a leading edge (131) and a trailing edge section (14) with a trailing edge (141), wherein the leading edge (131) and the trailing edge (141) divide the outer surface of the rotor blade (10) into a suction side (15) and a pressure side (16),
- a blade shell which defines the shape of the rotor blade (10), wherein the blade shell comprises a suction side portion (171) and a pressure side portion (172), and
- a structural element (20) for reinforcing and stiffening the structure of the rotor blade (10), wherein the structural element (20) is made of a pultruded fiber-reinforced plastic material (35),
**characterized in that**
- the structural element (20) comprises an optical fiber (21) which is embedded in the pultruded fiber-reinforced plastic material (35) for monitoring structural characteristics and/or integrity of the structural element (20), wherein the optical fiber (21) comprises at least one sensor (22).

2. Rotor blade (10) according to claim 1,
wherein the structural element (20) is a spar cap (19) or a root section reinforcement part of the rotor blade (10).

3. Rotor blade (10) according to one of the preceding claims, wherein the pultruded fiber-reinforced plastic material (35) comprises glass, carbon, aramid and/or basalt fibers.

4. Rotor blade (10) according to one of the preceding claims, wherein the pultruded fiber-reinforced plastic material (35) comprises an epoxy, polyurethane, vinylester or polyester thermosetting plastic.

5. Rotor blade (10) according to one of the preceding claims, wherein monitoring the structural characteristics and/or integrity of the structural element (20) includes monitoring delamination, cracks, in particular transverse cracks, and/or a fracture of the structural element (20).

6. Rotor blade (10) according to one of the preceding claims, wherein monitoring the structural characteristics and/or integrity of the structural element (20) includes monitoring the strain distribution throughout the structural element (20) which result from the global bending and/or twisting of the rotor blade (21) subject to cyclic aerodynamic and gravitational forces.

7. Rotor blade (10) according to one of the preceding claims, wherein the length of the optical fiber (21) exceeds five per cent, in particular ten per cent, even more particularly twenty percent of the length of the rotor blade (10).

8. Rotor blade (10) according to one of the preceding claims, wherein the sensor (22) is a distributed Bragg reflector, in particular a fiber Bragg grating, constructed in a short segment of the optical fiber (21).

9. Rotor blade (10) according to one of the preceding claims, wherein the optical fiber (21) comprises a plurality of sensors (22), which are distributed lengthwise in the optical fiber (21).

10. Rotor blade (10) according to one of the preceding claims,
wherein the rotor blade (10) comprises a plurality of optical fibers (21) with respective sensors (22), which are in particular arranged substantially in parallel to each other in the fiber-reinforced plastic material (35).

11. Rotor blade (10) according to claim 10,
wherein the plurality of optical fibers (21) are connected to an optical interrogator (23), which itself is connectable to a programmable logic controller of the wind turbine.

12. Rotor blade (10) according to claim 11,
wherein the optical interrogator (23) is situated in the root section (11) of the rotor blade (10) or in the hub of the wind turbine.

13. Wind turbine for generating electricity comprising at least one rotor blade (10) according to one of the preceding claims.

14. Method of monitoring the structural characteristics and/or integrity of a structural element (20) of a rotor blade (10) of a wind turbine,
wherein
- the structural element (20) is made of a pultruded fiber-reinforced plastic material and is suitable for reinforcing and stiffening the structure of the rotor blade (10), and
- the structural element (20) comprises an optical fiber (21) which is embedded in the pultruded fiber-reinforced plastic material (35), wherein the optical fiber (21) comprises at least one sensor (22),
wherein the method comprises the steps of
- determining the strain distribution along the structural element (20) by monitoring a bending of the optical fiber (21), and
- comparing the determined strain distribution with a reference strain distribution of the structural element.

15. Method of generating input data for controlling a wind turbine with at least one rotor blade (10), in particular via individual pitch control of the rotor blade (10),
wherein
- the rotor blade (10) comprises a structural element (20) which is made of a pultruded fiber-reinforced plastic material and which is suitable for reinforcing and stiffening the structure of the rotor blade (10), and
- the structural element (20) comprises an optical fiber (21) which is embedded in the pultruded fiber-reinforced plastic material (35), wherein the optical fiber (21) comprises at least one sensor (22),
wherein the method comprises the steps of
- determining the bending and/or twisting of the rotor blade (10) via the sensor (22) of the embedded optical fiber (21), and
- providing the determined values of the bending and/or twisting of the rotor blade (10) to a controller of the wind turbine.

## Patentansprüche

1. Rotorblatt (10) einer Windturbine, wobei das Rotorblatt (10) Folgendes umfasst:
- einen Vorderkantenabschnitt (13) mit einer Vorderkante (131) und einen Hinterkantenabschnitt (14) mit einer Hinterkante (141), wobei die Vorderkante (131) und die Hinterkante (141) die äußere Oberfläche des Rotorblatts (10) in eine Ansaugseite (15) und eine Druckseite (16) teilen,
- eine Blatthülle, die die Form des Rotorblatts (10) definiert, wobei die Blatthülle einen Ansaugseitenteil (171) und einen Druckseitenteil (172) umfasst, und
- ein strukturelles Element (20) zum Verstärken und Aussteifen der Struktur des Rotorblatts (10), wobei das strukturelle Element (20) aus einem stranggezogenen faserverstärkten Kunststoffmaterial (35) gefertigt ist,
**dadurch gekennzeichnet, dass**
- das strukturelle Element (20) eine optische Faser (21) umfasst, die in das stranggezogene faserverstärkte Kunststoffmaterial (35) eingebettet ist, zum Überwachen von strukturellen Eigenschaften und/oder der Integrität des strukturellen Elements (20), wobei die optische Faser (21) zumindest einen Sensor (22) umfasst.

2. Rotorblatt (10) nach Anspruch 1,
wobei das strukturelle Element (20) ein Holmgurt (19) oder ein Wurzelabschnittverstärkungsteil des Rotorblatts (10) ist.

3. Rotorblatt (10) nach einem der vorhergehenden Ansprüche, wobei das stranggezogene faserverstärkte Kunststoffmaterial (35) Glas-, Kohlenstoff-, Aramid- und/oder Basaltfasern umfasst.

4. Rotorblatt (10) nach einem der vorhergehenden Ansprüche, wobei das stranggezogene faserverstärkte Kunststoffmaterial (35) einen warmhärtenden Epoxid-, Polyurethan-, Vinylester- oder Polyesterkunststoff umfasst.

5. Rotorblatt (10) nach einem der vorhergehenden Ansprüche, wobei Überwachen der strukturellen Eigenschaften und/oder der Integrität des strukturellen Elements (20) Überwachung auf Schichtablösung, Risse, insbesondere quer verlaufende Risse, und/oder einen Bruch des strukturellen Elements (20) umfasst.

6. Rotorblatt (10) nach einem der vorhergehenden Ansprüche, wobei Überwachen der strukturellen Eigenschaften und/oder der Integrität des strukturellen Elements (20) Überwachen der Dehnungsverteilung im gesamten strukturellen Element (20) umfasst, die aus dem globalen Biegen und/oder Verwinden des Rotorblatts (21) resultiert, das zyklischen aerodynamischen und Gravitationskräften ausgesetzt ist.

7. Rotorblatt (10) nach einem der vorhergehenden Ansprüche, wobei die Länge der optischen Faser (21) fünf Prozent, insbesondere zehn Prozent und noch spezieller zwanzig Prozent der Länge des Rotorblatts (10) überschreitet.

8. Rotorblatt (10) nach einem der vorhergehenden Ansprüche, wobei der Sensor (22) ein verteilter Bragg-Reflektor ist, insbesondere ein Faser-Bragg-Gitter, konstruiert in einem kurzen Segment der optischen Faser (21).

9. Rotorblatt (10) nach einem der vorhergehenden Ansprüche, wobei die optische Faser (21) mehrere Sensoren (22) umfasst, die längs der optischen Faser (21) verteilt sind.

10. Rotorblatt (10) nach einem der vorhergehenden Ansprüche, wobei das Rotorblatt (10) mehrere optische Fasern (21) mit entsprechenden Sensoren (22) umfasst, die insbesondere im Wesentlichen parallel zueinander in dem faserverstärkten Kunststoffmaterial (35) angeordnet sind.

11. Rotorblatt (10) nach Anspruch 10,
wobei die mehreren optischen Fasern (21) mit einem optischen Interrogator (23) verbunden sind, der seinerseits mit einer programmierbaren Logiksteuerung der Windturbine verbindbar ist.

12. Rotorblatt (10) nach Anspruch 11,
wobei sich der optische Interrogator (23) im Wurzelabschnitt (11) des Rotorblatts (10) oder in der Nabe der Windturbine befindet.

13. Windturbine zum Erzeugen von Elektrizität, umfassend zumindest ein Rotorblatt (10) nach einem der vorhergehenden Ansprüche.

14. Verfahren zum Überwachen der strukturellen Eigenschaften und/oder der Integrität eines strukturellen Elements (20) eines Rotorblatts (10) einer Windturbine, wobei
- das strukturelle Element (20) aus einem stranggezogenen faserverstärkten Kunststoffmaterial gefertigt ist und geeignet ist zum Verstärken und Aussteifen der Struktur des Rotorblatts (10), und
- das strukturelle Element (20) eine optische Faser (21) umfasst, die in das stranggezogene faserverstärkte Kunststoffmaterial (35) eingebettet ist, wobei die optische Faser (21) zumindest einen Sensor (22) umfasst,
wobei das Verfahren die folgenden Schritte umfasst:
- Bestimmen der Dehnungsverteilung entlang des strukturellen Elements (20) durch Überwachen eines Biegens der optischen Faser (21), und
- Vergleichen der bestimmten Dehnungsverteilung mit einer Referenzdehnungsverteilung des strukturellen Elements.

15. Verfahren zum Erzeugen von Eingangsdaten zum Steuern einer Windturbine mit zumindest einem Rotorblatt (10), insbesondere über individuelle Steigungssteuerung des Rotorblatts (10), wobei
- das Rotorblatt (10) ein strukturelles Element (20) umfasst, das aus einem stranggezogenen faserverstärkten Kunststoffmaterial gefertigt ist und das geeignet ist zum Verstärken und Aussteifen der Struktur des Rotorblatts (10), und
- das strukturelle Element (20) eine optische Faser (21) umfasst, die in das stranggezogene faserverstärkte Kunststoffmaterial (35) eingebettet ist, wobei die optische Faser (21) zumindest einen Sensor (22) umfasst,
wobei das Verfahren die folgenden Schritte umfasst:
- Bestimmen des Biegens und/oder Verwindens des Rotorblatts (10) über den Sensor (22) der eingebetteten optischen Faser (21), und
- Bereitstellen der bestimmten Werte des Biegens und/oder Verwindens des Rotorblatts (10) für eine Steuerung der Windturbine.

## Revendications

1. Pale de rotor (10) d'une éolienne, la pale de rotor (10) comprenant
- une section de bord d'attaque (13) avec un bord d'attaque (131) et une section de bord de fuite (14) avec un bord de fuite (141), dans laquelle le bord d'attaque (131) et le bord de fuite (141) divisent la surface externe de la pale de rotor (10) en un côté aspiration (15) et un côté pression (16),
- une coque de pale qui définit la forme de la pale de rotor (10), dans laquelle la coque de pale comprend une portion de côté aspiration (171) et une portion de côté pression (172), et
- un élément structurel (20) pour renforcer et rigidifier la structure de la pale de rotor (10), dans lequel l'élément structurel (20) est fait d'un matériau plastique renforcé par des fibres pultrudées (35),
**caractérisée en ce que**
- l'élément structurel (20) comprend une fibre optique (21) qui est intégrée dans le matériau plastique renforcé par des fibres pultrudées (35) pour surveiller des caractéristiques structurelles et/ou l'intégrité de l'élément structurel (20), dans lequel la fibre optique (21) comprend au moins un capteur (22).

2. Pale de rotor (10) selon la revendication 1,
dans laquelle l'élément structurel (20) est un capuchon de longeron (19) ou une partie de renforcement de section d'emplanture de la pale de rotor (10).

3. Pale de rotor (10) selon l'une des revendications précédentes,
dans laquelle le matériau plastique renforcé par des fibres pultrudées (35) comprend des fibres de verre, de carbone, d'aramide et/ou de basalte.

4. Pale de rotor (10) selon l'une des revendications précédentes,
dans laquelle le matériau plastique renforcé par des fibres pultrudées (35) comprend un matériau plastique thermodurcissable d'époxy, de polyuréthane, d'ester de vinyle ou de polyester.

5. Pale de rotor (10) selon l'une des revendications précédentes,
dans laquelle la surveillance des caractéristiques structurelles et/ou de l'intégrité de l'élément structurel (20) inclut la surveillance de délamination, des fissures, en particulier des fissures transversales, et/ou une fracture de l'élément structurel (20).

6. Pale de rotor (10) selon l'une des revendications précédentes,
dans laquelle la surveillance des caractéristiques structurelles et/ou de l'intégrité de l'élément structurel (20) inclut la surveillance de la distribution de la déformation à travers l'élément structurel (20) qui résulte de la flexion et/ou de la torsion globale·s de la pale de rotor (21) sujette à des forces aérodynamiques et gravitationnelles cycliques.

7. Pale de rotor (10) selon l'une des revendications précédentes,
dans laquelle la longueur de la fibre optique (21) excède cinq pour cent, en particulier dix pour cent, plus particulièrement encore vingt pour cent de la longueur de la pale de rotor (10).

8. Pale de rotor (10) selon l'une des revendications précédentes,
dans laquelle le capteur (22) est un réflecteur de Bragg distribué, en particulier un réseau de Bragg à fibres, construit dans un segment court de la fibre optique (21).

9. Pale de rotor (10) selon l'une des revendications précédentes,
dans laquelle la fibre optique (21) comprend une pluralité de capteurs (22), qui sont répartis dans le sens de la longueur dans la fibre optique (21).

10. Pale de rotor (10) selon l'une des revendications précédentes,
dans laquelle la pale de rotor (10) comprend une pluralité de fibres optiques (21) avec des capteurs (22) respectifs, qui sont en particulier agencés essentiellement parallèles l'un par rapport à l'autre dans le matériau plastique renforcé par des fibres (35).

11. Pale de rotor (10) selon la revendication 10,
dans laquelle la pluralité des fibres optiques (21) sont raccordées à un interrogateur optique (23), qui lui-même peut être raccordé à un contrôleur logique programmable de l'éolienne.

12. Pale de rotor (10) selon la revendication 11,
dans laquelle l'interrogateur optique (23) est situé dans la section d'emplanture(11) de la pale de rotor (10) ou dans le moyeu de l'éolienne.

13. Éolienne pour générer de l'électricité comprenant au moins une pale de rotor (10) selon l'une des revendications précédentes.

14. Procédé de surveillance des caractéristiques structurelles et/ou de l'intégrité d'un élément structurel (20) d'une pale de rotor (10) d'une éolienne,
dans lequel
- l'élément structurel (20) est fait d'un matériau plastique renforcé par des fibres pultrudées et convient pour renforcer et rigidifier la structure de la pale de rotor (10), et
- l'élément structurel (20) comprend une fibre optique (21) qui est intégrée dans le matériau plastique renforcé par des fibres pultrudées (35), dans lequel la fibre optique (21) comprend au moins un capteur (22),
dans lequel le procédé comprend les étapes de
- détermination de la distribution de la déformation le long de l'élément structurel (20) en surveillant une flexion de la fibre optique (21), et
- comparant la distribution de la déformation déterminée à une distribution de déformation de référence de l'élément structurel.

15. Procédé de génération de données d'entrée pour commander une éolienne ayant au moins une pale de rotor (10), en particulier *via* une commande d'inclinaison individuelle de la pale de rotor (10),
dans lequel
- la pale de rotor (10) comprend un élément structurel (20) qui est fait d'un matériau plastique renforcé par des fibres pultrudées et qui est approprié pour renforcer et rigidifier la structure de la pale de rotor (10), et
- l'élément structurel (20) comprend une fibre optique (21) qui est intégrée dans le matériau plastique renforcé par des fibres pultrudées (35), dans lequel la fibre optique (21) comprend au moins un capteur (22),
dans lequel le procédé comprend les étapes de
- détermination de la flexion et/ou de la torsion de la pale de rotor (10) *via* le capteur (22) de la fibre optique (21) intégrée, et
- fourniture des valeurs déterminées de la flexion et/ou de la torsion de la pale de rotor (10) à un contrôleur de l'éolienne.
